# EUROPÄISCHE PATENTANMELDUNG

(11) **EP 0 698 871 A1**
(43) Veröffentlichungstag der Anmeldung: **28.02.1996**
(21) Anmeldenummer: 95112135.9
(22) Anmeldetag: 02.08.1995
(51) Int. Cl.: G08G 1/017

(54) **Sensorsystem zur berührungslosen Erfassung eines Fahrzeuglenker-Verhaltens**

(30) Priorität: 17.08.1994 DE 4429064
(71) Anmelder: Daimler-Benz Aerospace Aktiengesellschaft, D-81663 München (DE)
(72) Erfinder: Otto, Ulrich, D-83365 Nussdorf (DE)

(57) **Zusammenfassung**

Bei einem Sensorsystem 4, 4a zur berührungslosen Erfassung eines Fahrzeuglenker-Verhaltens 3 und einem mit dem System verknüpften Computer 7, 7a zur Auswertung der Sensorsignale wird vorgeschlagen, daß zur Aufnahme des Reaktionsverhaltens eines Fahrzeuglenkers durch ein plötzlich in sein Sichtfeld tretendes Hinweis- oder Warnschild "***Achtung Polizei Fahrzeugkontrolle***" 5, 5a ein am Rand oder über einer Fahrbahn 1, 1a verlegtes, mit Sensoren 4, 4a bestücktes Band 9 oder Brücke 14, 15 von diesem Warnschild 5, 5a wegführend angeordnet ist, dessen Sensoren 4, 4a mit einem Computer 7, 7a zur Signalaufnahme, zum Signalvergleich mit gespeicherten Verhaltensnormalwerten und zur synchronen Auslösung einer Videokamera 8, 8a sowie einer Datenbank des Computers 7, 7a verbunden ist.

## Beschreibung

Die Erfindung bezieht sich auf ein Sensorsystem zur berührungslosen Erfassung eines Fahrzeuglenker-Verhaltens gemäß dem Oberbegriff des Anspruchs 1.

Ausgehend von der Erkenntnis, daß generell jeder Hinweis auf eine unvorbereitet angekündigte Polizeiaktion wie beispielsweise ein Hinweisschild "***Achtung Polizeikontrolle***" oder die Präsenz von Polizeifahrzeugen - besonders mit rotierendem Blaulicht - zu nicht kontrollierbaren vegetativen Reaktionen beim Fahrzeuglenker führt, welche sich kurzzeitig auf das Fahrzeug (primär über Gaspedal und Lenkrad) und damit auf die Dynamik und Richtung des Fahrzeuges überträgt. Es ist beim heutigen Stand der Technik möglich, solche "Feinreaktionen" zu detektieren und auszuwerten sowie im zutreffenden Fall zu agieren.

Daß solche vegetativen Reaktionen mit Erfolg meß- und auswertbar sind, hat seit vielen Jahren der sogenannte "Lügendetektor" des Amerikaners J.A. Larson beweisen, dem es zuverlässig möglich ist, die unwillkürlich hervorgerufenen Adrenalinausschüttungen, die zu gewissen physiologischen Veränderungen führen, zu messen und auszuwerten.

Mit der neuen Computer- und Sensortechnik ist es möglich, kurzzeitige "Feinreaktionen" eines motorgetriebenen Fahrzeugs zu erfassen, mit relevanten Daten zu vergleichen und gegebenenfalls das Fahrzeug zu einer genaueren Personenkontrolle aus dem Verkehr zu leiten.

Aus dem Firmenprospekt ANT Bosch Telekom: Stauwarnanlage auf der Bundesautobahn A3 bei Stockstadt, 10, 1992 ist ein Sensorsystem zur Verkehrsdatenerfassung mittels unter der Straße liegender Meßquerschnitte bzw. Induktionsschleifen bekannt. Kurzzeitveränderungen eines Fahrzeugverhaltens bzw. des Schwingungsverhaltens, die durch vegetative Reaktionen des Fahrzeugführers ausgelöst werden, können hiermit nicht erfaßt werden.

Aus der DE 34 22 764 A1 ist es bekannt, Verkehrsdaten und Situationen mittels einer Videokamera aufzunehmen. Die Erfassung von durch vegetative Fahrzeuglenker-Reaktionen verursachte Fahrzeugfunktionsbeeinflussung ist nicht erkannt worden.

Aus der DE 21 60 453 B2 ist es bekannt, ein Steuersystem mit einer von der Bedienungsperson beeinflußten Steuergröße gleichzeitig als Regelsystem für die Anpassung des dynamischen Verhaltens an von außen kommende Störungen anzupassen. In diesem sehr aufwendigen System werden die von den menschlichen Verhaltensweisen beeinflußten Parameter mittels zahlreicher einzelner Meßwertgeber aufgenommen, mit den Körperparametern des Lenkers und des Kraftfahrzeugs sowie mit den jeweils gegebenen Umweltparametern in Zusammenhang gebracht. Eine Erfassung kurzzeitiger Feinreaktionen ist allein schon aus wirtschaftlichen Gründen nicht durchführbar.

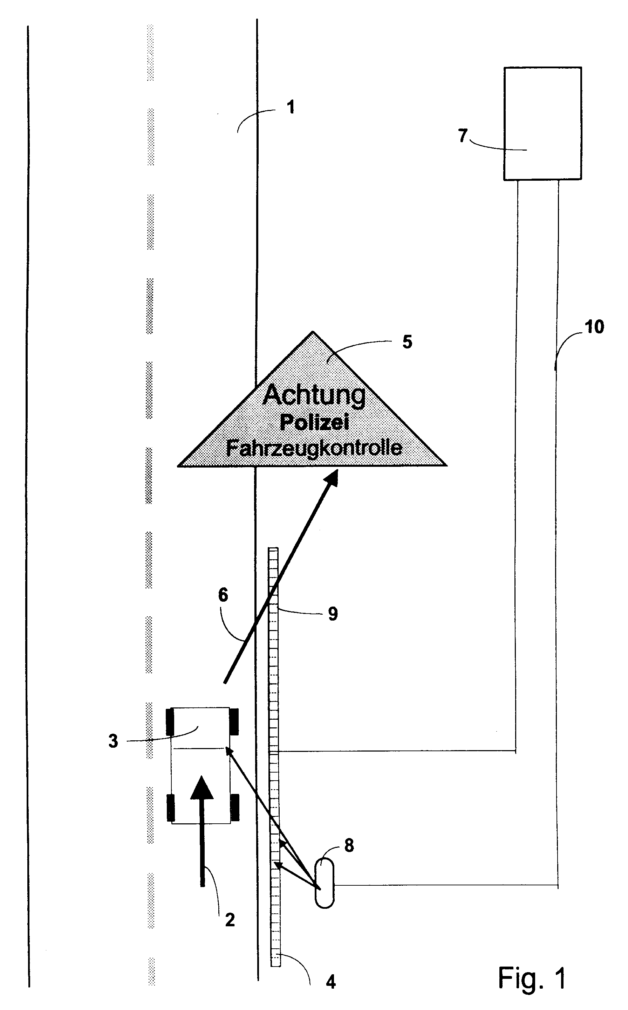

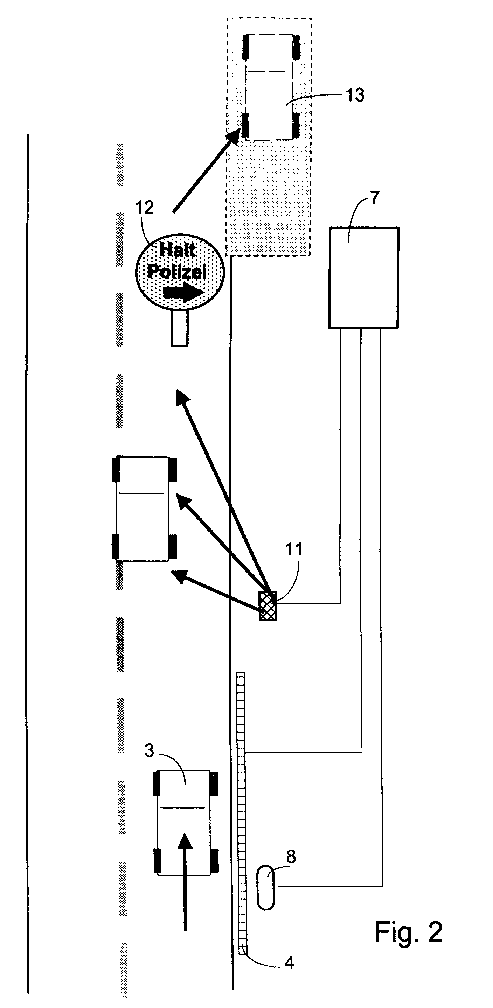

Der vorliegenden Erfindung liegt die Aufgabe zugrunde, ein Sensorsystem der eingangs genannten Art zu schaffen, das ortsungebunden frei verleg- und einsetzbar ist (gemäß Fig. 1 und Fig. 2), welches die vom Lenker an der betreffenden Verlegestelle unwillkürlich induzierten Veränderungen in der Fahrzeugführung zusammen mit den gegebenen Fahrzeugdaten erfaßt und einer Computereinheit zur Auswertung übergibt.

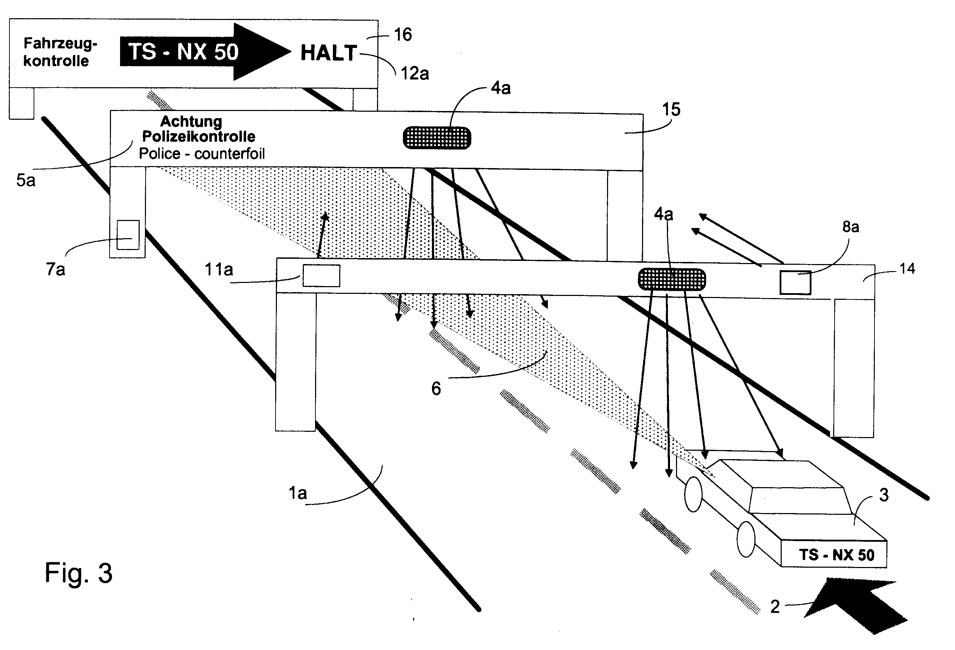

Auch eine Version fest eingebaut auf einen oder mehreren Autobahn-Meßbrücken über die Straße ist anwendbar, z.B. in einer Elektro-Mautanlage/"Road-Pricing-System" (Fig. 3), elektronisch gesteuerte Verkehrsschilder oder Verkehrsbeeinflußungsanlagen.

Diese Aufgabe wird durch die im Anspruch 1 aufgezeigten Maßnahmen gelöst. In den Unteransprüchen sind Ausgestaltungen und Weiterbildungen angegeben und in der nachfolgenden Beschreibung sind Ausführungsbeispiele erläutert und in den Figuren der Zeichnung skizziert. Es zeigen:
- Fig. 1: ein Schaubild über eine Verkehrsszene in einem Ausführungsbeispiel (ortsungebunden frei verleg- und einsetzbar),
- Fig. 2: ein Schaubild über eine Verkehrsszene in einem anderen Ausführungsbeispiel (ortsungebunden frei verleg- und einsetzbar) und
- Fig. 3: ein Schaubild über eine Verkehrsszene in einem anderen Ausführungsbeispiel (fest eingebaut in eine Autobahnmeßbrücke).

Bei dem Ausführungsbeispiel gemäß Fig. 1 und Fig. 3 wird davon ausgegangen, daß bei jedem Fahrzeuglenker 3 von beispielsweise gestohlenen Fahrzeugen, einer unberechtigten Einreise oder einer Teilnahme an einem Gewalt- oder sonstigen Strafakt, es bei dem plötzlichen Erkennen 6 eines Hinweisschildes 5, 5a "***Polizeikontrolle***" - das möglichst an einer relativ spät einsehbaren Stelle aufgestellt ist - primär und kurzzeitig zu einer gewissen Feinreaktion am Gaspedal, am Lenkrad etc. kommt, die sich von dem statistischen Mittel unterscheidet. Primär wird es sich hier um Veränderungen im Schwingungsverhalten 2 (der Resonanzen und eingeleiteten Schwingungen) des Fahrzeuges handeln bzw. durch Laständerungen des Fahrzeuges, z.B. durch Kurzreaktionen am Gaspedal, die von Sensoren 4, 4a erfaßt werden. Zusätzlich auch um Daten der Motordrehzahl, die über die Geräuschentwicklung des Motors erfaßt werden. Diese Sensoren 4, 4a befinden sich z.B. auf einem auslegbaren Band 9, das etwa 60 m lang ist und parallel zur Straße 1 an deren Rand ausgelegt wird oder in einer Meßbrücke 14, 15 über der Straße (z.B. integriert in ein High-Tech-Autobahnmautsystem mit den Sensoren 4a). Bei den Sensoren 4, 4a handelt es sich um Sensoren, die im mm-Wellenbereich arbeiten bzw. um mm-Wellen-Radar und Laser, aber auch um Schall-Druckwellen-Sensoren. Die Sensoren 4, 4a erfassen die vom Lenker induzierten Veränderungen in dem Fahrzeugverhalten und der Fahrzeugführung und vergleichen sowie analysieren diese in einem komplexen Verhaltensprogramm in einer Computereinheit 7, 7a.

Eine Automatisierung einer solchen Anlage sieht vor, daß der Verkehrsteilnehmer entweder durch eine automatische elektronische Herauswinkanlage 12, 12a in eine Park-Haltebucht 13 dirigiert wird mit einer elektronisch angezeigten und für die Polizei überwachten Ziel-Halte-Warteposition.

Alternativ gibt es auch die Möglichkeit, aufgrund des erkannten und registrierten Kennzeichens das Fahrzeug nicht im direkten Zusammenhang mit der Analyse und Anlage zu kontrollieren, sondern erst zu einem späteren Zeitpunkt und an einem geeigneteren Ort für Verkehrskontrollen, z.B. bei Verlassen der Autobahn - ggf. auch unter Einbeziehung eines Verkehrsüberwachungsnetzes, Mautsystems, Verkehrsleitsystems - wo zwischenzeitlich der weitere Fahrweg des Fahrzeuges verfolgt und automatisch analysiert worden ist.

Das beispielsweise 60 m lange Auslegeband 9 ist mit einer Anzahl hochempfindlicher Millimeter-Sensoren 4, 4a versehen und läßt sich schnell und problemlos am Straßenrand auf dem Erdboden auslegen oder einstecken. Dieses Auslegeband 9 mit den integrierten Sensoren 4 ist entweder über ein Kabel 10 oder über Funk mit einem mobilen, tragbaren Computer 7 verbunden, der die einzelnen Daten kontinuierlich auswertet, abspeichert und ausgibt, ggf. mit der Anordnung, das erfaßte Fahrzeug zu kontrollieren.

Das Sensorband 9 oder die Meßbrücke 14, 15 wird im Bereich der ersten Sichterfassung eines Hinweisschildes "***Achtung Polizeikontrolle***" 5, 5a verlegt. Ortsunabhängiger wird der Verlegeplatz sein, wenn das Schild sozusagen als "Elektronische Leuchttafel" ausgeführt ist und der vorstehende Hinweis wahlweise aufleuchtet. Gleichzeitig mit der Sensorerfassung wird das Fahrzeug mit einer Videokamera 8, 8a aufgenommen, die im Bereich z.B. des Sensorbandes 9 steht und ebenfalls mit dem Computer 7, 7a verbunden ist, um das Fahrzeug zu identifizieren und um die Sensordaten dem Fahrzeug erkennungsdienstlich zuzuordnen.

Als Computer 7, 7a eignet sich besonders ein selbstlernendes Informationssystem (Neuroinformatik) mit intelligenter Mustererkennungm Auswertung, Speicherung und (assoziativen) Verarbeitung von Informationen über lange und kurze Zeiträume, sowie Verfahrenswege entsprechend der bekannten "Fuzzy-Logik". Ein solches System zur Wissens-Verarbeitung speichert Verhaltensinformationen über regelmäßiges und unregelmäßiges Fahrverhalten für lange Zeit in einer Datenbank, wahrend gleichzeitig mit diesen Informationen die augenblicklich eingehenden Fahrdaten verglichen werden und nur die Daten gespeichert werden, die in der augenblicklich laufenden Messung von Bedeutung sind. Was in einer nachfolgenden Messung nicht von Bedeutung ist, wird "schnell vergessen".

Wie schon angeführt, ist dem Sensorsystem 4, 4a eine Videokamera 8, 8a zugeordnet, die kreiselstabilisiert ist und ein großes Zoom aufweist, das sich auf jedes Kennzeichen computergesteuert automatisch aufschaltet und über den Grauwert die Zahlen und Buchstaben des Fahrzeugschildes liest und mit einer Datenbank im Computer vergleicht, beispielsweise ob das Fahrzeug als gestohlen gemeldet worden ist etc. Zusätzlich kann so eine Kamera mit einer Anti-Wackel-Einrichtung versehen sein, z.B. auf Basis eines rein elektronischen Systems bzw. einer Kombination Optik und Elektronik.

In den Figuren 2 und 3 ist ein Ausführungsbeispiel gezeigt, das eine weiterbildende Ausführungsform zur Fig. 1 darstellt. Hier ist ein zusätzliches erweitertes Überwachungssystem 11, 11a auf Laserbasis angeordnet - beispielsweise ein Laserbewegungsmelder - der das Fahrzeug vor dem Kontrollpunkt 13, aber nach dem Sensorband 9 (oder der Meßbrücke 14, 15) im Hinblick auf das augenblickliche Fahrverhalten überwacht und anzeigt, ob der Fahrer des herausgerufenen Fahrzeugs der Aufforderung auch Folge leisten will oder beabsichtigt, durch die Kontrolle durchzufahren und damit die kontrollierenden Polizeibeamten gefährdet.

## Patentansprüche

1. Sensorsystem zur berührungslosen Erfassung eines Fahrzeuglenker-Verhaltens und einem mit dem System verknüpften mobilen oder stationären Computer zur Auswertung der Sensorsignale, **dadurch gekennzeichnet,** daß zur Aufnahme des Reaktionsverhaltens eines Fahrzeuglenkers (3) durch ein plötzlich in sein Sichtfeld (6) tretendes Hinweis- oder Warnschild (5, 5a) ein am Rand einer Fahrbahn (1, 1a) verlegtes, mit hochempfindlichen Millimeterwellen-Sensoren (4, 4a) bestücktes Band (9) oder Brücke (14, 15) im Bereich der ersten Sichterfassung von diesem Warnschild (5, 5a) angeordnet ist und mit einem tragbaren, mobilen Computer (7, 7a) zur Signalaufnahme, zum Signalvergleich mit gespeicherten Verhaltensnormalwerten sowie mit einer Datenbank des Computers (7, 7a) verbunden ist

2. Sensorsystem nach Anspruch 1, **dadurch gekennzeichnet,** daß der mobile Computer (7, 7a) als selbstlernendes System mit intelligenter Mustererkennung, Auswertung, Speicherung und assoziativer Informationsverarbeitung über lange und kurze Zeiträume ausgebildet ist und einem an sich bekannten "Fuzzy-Logiksystem" entspricht.

3. Sensorsystem nach Anspruch 1 oder 2, **dadurch gekennzeichnet,** daß als Sensoren (4, 4a) "mm-Wellen Radar", Schalldruckwellen- und Lasersensoren verwendet werden, die über ein 50 m bis 100 m langes Verlegeband (9) aus Textil- oder Kunststoffmaterial miteinander verbunden oder in einer Meßbrücke (14, 15) integriert sind.

4. Sensorsystem nach einem der Ansprüche 1 bis 3, **dadurch gekennzeichnet,** daß das mit den Sensoren (4, 4a) versehene Band (9) oder die Meßbrücke (14, 15) über Funk mit einem weitentfernten Zentralcomputer der Polizei verbunden ist.

5. Sensorsystem nach einem der Ansprüche 1 bis 4, **dadurch gekennzeichnet,** daß ihm ein Überwachungssystem (11, 11a) auf Laserbasis, beispielsweise ein Laserbewegungsmelder zugeordnet ist.

6. Sensorsystem nach einem der Ansprüche 1 bis 4, dadurch gekennzeichnet, daß eine kreiselstabilisierte Videokamera (8, 8a) dem Computer (7) zugeordnet ist, welche ein computergesteuertes Zoomobjektiv aufweist, das sich automatisch aufdas Fahrzeugschild ausrichtet, dieses ablichtet und in die Datenbank des Computers (7, 7a) zum Vergleich mit gespeicherten Fahrzeugdaten eingibt.
